# EUROPÄISCHE PATENTSCHRIFT

(11) **EP 1 341 685 B1**
(45) Veröffentlichungstag und Bekanntmachung des Hinweises auf die Patenterteilung: **17.01.2007**
(21) Anmeldenummer: 01989356.9
(22) Anmeldetag: 30.11.2001
(51) Int. Cl.: B60R 25/00, B60R 25/04

(54) **VORRICHTUNG ZUM SCHLÜSSELLOSEN BETRIEB EINES KRAFTFAHRZEUGS**
DEVICE FOR OPERATING A MOTOR VEHICLE WITHOUT A KEY
DISPOSITIF PERMETTANT DE FAIRE FONCTIONNER UNE AUTOMOBILE SANS L'AIDE D'UNE CLE

(30) Priorität: 02.12.2000 DE 10059991
(43) Veröffentlichungstag der Anmeldung: 10.09.2003
(73) Patentinhaber: ROBERT BOSCH GMBH, 70442 Stuttgart (DE)
(72) Erfinder: GIEHLER, Elmar, 70499 Stuttgart-Hausen (DE); WACH, Achim, 71706 Markgroeningen (DE); KAISER, Karl-Heinz, 71732 Tamm (DE)
(86) Internationale Anmeldenummer: PCT/DE2001/004470
(87) Internationale Veröffentlichungsnummer: WO 2002/043994

(56) Entgegenhaltungen:
- EP-A- 0 857 629
- EP-A- 0 865 976
- EP-A- 0 893 315
- DE-A- 19 624 651
- GB-A- 2 294 769
- US-A- 5 583 383

## Beschreibung

### Stand der Technik

Die Erfindung geht aus von einer Vorrichtung zum schlüssellosen Betrieb eines Kraftfahrzeugs nach der Gattung des unabhängigen Anspruchs. Aus der DE-44 37 334 C1 ist eine servicefreundliche Wegfahrsperre bekannt. Um eine einfache Wartung einzelner Motorfunktionseinheiten zu ermöglichen, weist ein Funktionssteuergerät Umgehungsmittel auf, die eine außerordentliche Entriegelung eines Funktionssteuergerätes durch eine externe Einrichtung gestatten. Damit ist insbesondere eine vereinfachte Wartung möglich, bei der eine ordnungsgemäße Freischaltung der Steuergeräte nicht erfolgen muß. Um auch im Normalbetrieb in kritischen Situationen eine erneute Freischaltung des Kraftfahrzeugs zu gewährleisten, ist der Rückgriff auf die externe Einrichtung nicht praktikabel.

Aus der EP-A-0857629 ist ein Sicherheitssystem gemäß dem Oberbegriff des Anspruchs 1 für ein Fahrzeug bekannt, das eine Tastatur zum Empfang von Eingabecodes umfasst, die Nutzereingabecodes und einen Startcode enthalten. Weiterhin ist ein Prozessor vorgesehen, der mit der Tastatur verbunden ist zum Empfang von Signalen, die dem jeweiligen Eingabecode entsprechen, wobei der Prozessor ein Ausgangssignal bereitstellt, wenn ein Eingabecode mit einem ersten Nutzereingabecode übereinstimmt und durch den Startcode ergänzt wird. Darüber hinaus stellt der Prozessor das Ausgangssignal bereit, wenn der Startcode innerhalb einer vorgebbaren Zeitdauer nach Ausschalten das Fahrzeugs eingegeben wurde, wobei die Zeitdauer durch Eingabe eines zweiten Nutzereingabecodes eingestellt werden kann. Ein Steuergerät, das mit dem Prozessor in einer Wirkverbindung steht und eine Komponente des Fahrzeugs steuert, dient zum Start des Fahrzeugs, wenn das Ausgangssignal des Prozessors empfangen wurde.

Es ist Aufgabe der vorliegenden Erfindung, in bestimmten Situationen den Betrieb des Kraftfahrzeugs zuzulassen, ohne Einbußen der Sicherheit gegen Diebstahlschutz hinnehmen zu müssen. Die Aufgabe wird durch die Merkmale des unabhängigen Anspruchs gelöst.

### Vorteile der Erfindung

Die erfindungsmäßige Vorrichtung zum schlüssellosen Betrieb eines Kraftfahrzeugs weist einen Transponder auf, der an zumindest einen Sender/Empfänger einen Code sendet. Ein Steuergerät vergleicht den Code mit einem erwarteten Code und gibt bei Übereinstimmung zumindest eine für den Betrieb des Kraftfahrzeugs notwendige Komponente frei. Im abgestellten Zustand des Kraftfahrzeugs deaktiviert sie diese. Es ist zumindest ein Zeitgeber vorgesehen, dessen Ausgangswert mit einer vorgebbaren Zeitdauer verglichen wird, wobei eine Deaktivierung der zumindest einen für den Betrieb des Kraftfahrzeugs notwendigen Komponente erfolgt, wenn der Ausgangswert des Zeitgebers die vorgebbare Zeitdauer überschreitet. Der Zeitgeber wird in Abhängigkeit von einem den Zustand des Antriebsmotors erfassenden Sensorsignals gestartet. Als Sensorsignal eignet sich beispielsweise die Motordrehzahl, die Aufschluß darüber gibt, ob der Motor noch läuft. Der Zeitgeber wird mit dem Abstellen des Motors aktiviert, so daß innerhalb der dann beginnenden Zeitdauer ein erneuter ordnungsgemäßer Betrieb des Kraftfahrzeugs möglich ist. Im Falle einer Betätigung eines Bedienelements und bei Nichtüberschreiten der vorgebbaren Zeitdauer durch den Ausgangswert des Zeitgebers erfolgt eine Unterbindung der Deaktivierung der für den Betrieb des Kraftfahrzeugs notwendigen Komponente.

Unter Deaktivierung einer betriebsnotwendigen Komponente in Verbindung mit einer Lenkradverriegelung wird der (elektromotorische) Verriegelungsvorgang des Lenkrads verstanden. Auch diese Verrieglung wird erst vorgenommen, wenn der Zeitgeber die vorgebbare Zeitdauer überschritten hat. Innerhalb dieser Zeitdauer hat der Benutzter noch die Möglichkeit, durch Betätigung eines Bedienelements wie Gas-Brems- oder Kupplungspedal diesen Verrieglungsvorgang zu unterbinden. Damit läßt sich beispielsweise das Kraftfahrzeug auch bei abgestelltem Motor noch sicher in die Garage rollen, ohne daß hierbei der Lenkvorgang beeinträchtigt würde.

Der Start des Kraftfahrzeugs erfolgt nach einem als gültig erkannten Codeaustausch zwischen dem Transponder und dem Steuergerät. Wird der Motorstart nur nach diesem Codeaustausch zugelassen, können bei einigen Szenarien kritische Situationen für den Fahrzeugbenutzer auftreten, wenn nicht erfindungsgemäße Abhilfe geschaffen wird. Bei der erfindungsgemäßen Vorrichtung kann das Fahrzeug nach einer ordnungsgemäßen Freigabe innerhalb einer Zeitspanne auch dann gestartet werden, wenn über den Sender/Empfänger kein oder kein erwarteter Code eingeht. Damit ist ein erneuter Start auch ohne Transponder möglich. Gerät der Transponder während der Fahrt unbemerkt aus dem Fahrzeug und der Fahrer würgt beispielsweise den Motor an einer gefahrenträchtigen Stelle, wie beispielsweise einem Bahnübergang, ab, so kann der Benutzer auch ohne Transponder innerhalb einer vorgebbaren Zeitspanne das Fahrzeug erneut starten, ohne daß zwischen dem Transponder und dem Sender/Empfänger die zur erstmaligen Freigabe des Fahrzeugs notwendige Codeübereinstimmung erzielt werden müßte. Die erneute Startmöglichkeit des Kraftfahrzeugs wird realisiert, indem die Deaktivierung der betriebsnotwendigen Komponente erst nach der vorgebbaren Zeitdauer erfolgt, sofern kein innerhalb dieser Zeitdauer liegender Bedienvorgang erkannt wird.

Eine vorteilhafte Ausgestaltung koppelt den Start des Zeitgebers mit einem Ausgangssignal eines Bedienelements. Dadurch können in einfacher Weise benutzerkritsche Situationen erkannt werden. So läßt sich das Ausgangssignal des Start/Stop-Schalters in der Form des Signals "Zündung ein/aus" mit der Motordrehzahl verknüpfen. Läuft der Motor trotz des Signals "Zündung ein" nicht mehr, kann man davon ausgehen, daß der Fahrer den Motor abgewürgt hat. In diesem Fall wird der Zeitgeber gestartet, um die Deaktivierung der betriebsnotwendigen Komponente zu verzögern und innerhalb dieser Zeitspanne den ordnungsgemäßen Start und Betrieb des Kraftfahrzeugs auch ohne Berechtigungsnachweis mittels Transponder vornehmen zu können. Die Deaktivierung wird somit nicht vorgenommen, wenn eine Änderung eines Bedienelementsignals auf einen Bedienvorgang innerhalb der Zeitspanne schließen läßt.

Eine zweckmäßige Ausgestaltung sieht vor, daß bei laufendem Motor ein Suchsignal abgesetzt wird, wenn das Fahrzeug steht. Das Suchsignal veranlaßt den Transponder zur Rücksendung eines Antwortsignals, das auf Berechtigung überprüft wird. Nur in unkritischen Situationen wird die Fahrberechtigung erneut überprüft. Bei Fehlen des Transponders lassen sich entsprechende weitere Aktionen einleiten wie beispielsweise die Aktivierung einer Warnanzeige oder das Blockieren der entsprechenden Steuergeräte. Das Suchsignal wird vorzugsweise dann abgesetzt, wenn das Fahrzeug steht, die Kupplung nicht getreten ist, kein Gang eingelegt ist und die letzte Abfrage nicht länger als eine bestimmte Zeitspanne zurückliegt.

Weitere zweckmäßige Weiterbildungen ergeben sich aus weiteren abhängigen Ansprüchen und aus der Beschreibung.

### Beschreibung

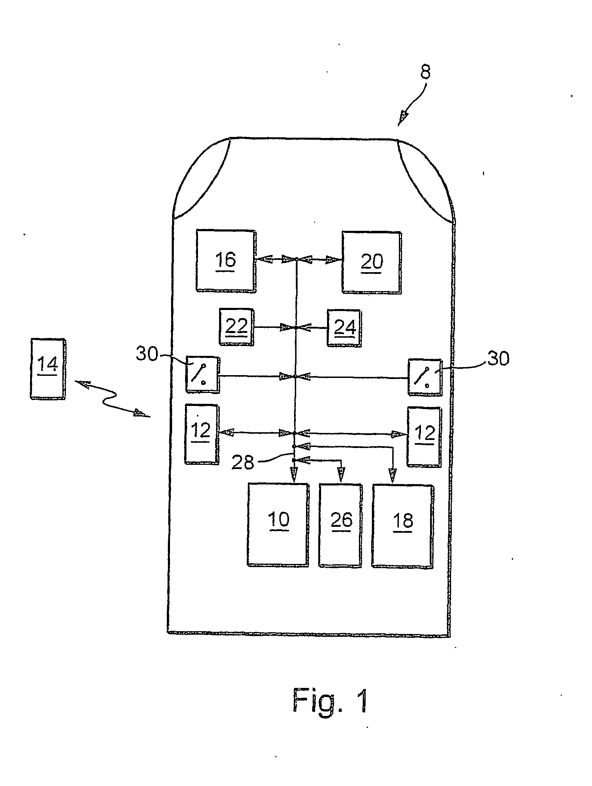

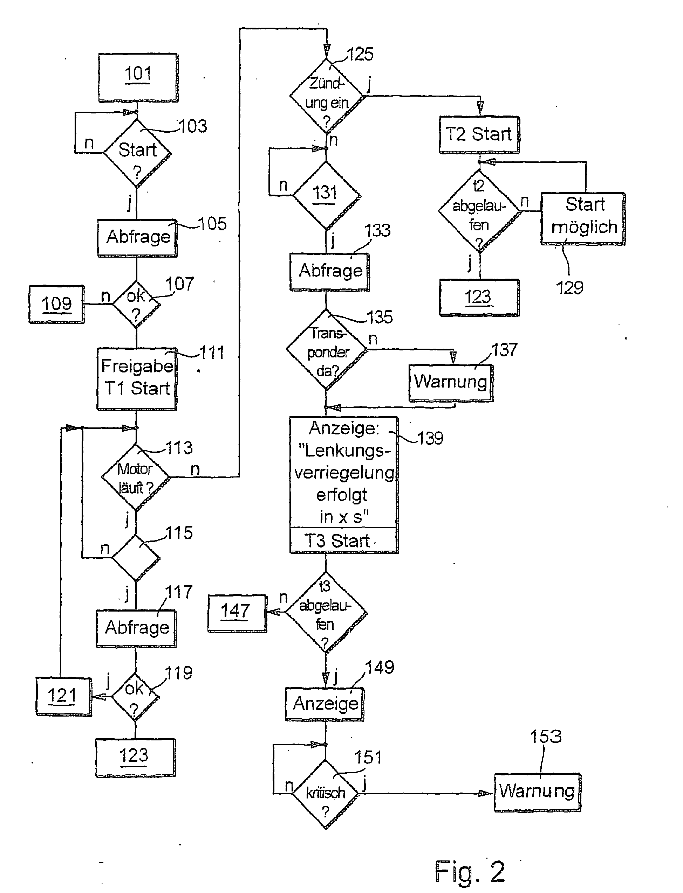

Ein Ausführungsbeispiel der Erfindung ist in der Zeichnung dargestellt und wird im Folgenden näher beschrieben. Es zeigen die Figuren 1 ein Blockschaltbild sowie die Figur 2 ein Flußdiagramm zum Betrieb der erfindungsgemäßen Vorrichtung.

In einem Kraftfahrzeug 8 ist ein Steuergerät 10 über ein Bussystem 28 mit an den Türseitenbereichen angeordneten Sendern/Empfängern 12 verbunden. Dem Bussystem 28 sind Signale eines ersten und eines zweiten Bedienelements 22, 24 zugeführt. Eine Lenkradverriegelung 16, ein Funktionsteuergerät 18, eine Anzeigeeinheit 20, eine Sensorik 26 sowie zwei Türüberwachungsschalter 30 sind ebenfalls mit dem Bussystem verbunden.

Nachfolgend wird ein Bedienvorgang zum Starten und Stillsetzen des Kraftfahrzeugs 8 beschrieben. In einem Schritt 101 ist das Kraftfahrzeug 8 abgestellt und befindet sich in seinem Grundzustand. Es soll gestartet werden. Das Kraftfahrzeug 8 wird ordnungsgemäß entriegelt, was ebenfalls über eine Berechtigungsabfrage mit dem Transponder 14 erfolgen kann. Der Transponder 14 gelangt zusammen mit dem Fahrer in den Innenraum des Kraftfahrzeugs 8. Das Steuergerät 10 überprüft zyklisch, ob eine Startbedingung vorliegt, Abfrage 103. Die Startbedingung ist dann erfüllt, wenn in einer ersten Alternative die beiden räumlich entfernt voneinander angeordneten Bedienelemente 22, 24 betätigt wurden. Bei dem ersten Bedienelement 22 handelt es sich hierbei um einen Startschalter oder Startknopf, der beispielsweise in der Mittelkonsole oder im Cockpitbereich angeordnet ist. Auch könnte ein Ziehschalter am Gangwahlhebel oder ähnliches vorgesehen sein. Als zweites Bedienelement 24 kommt beispielsweise das Kupplungs-, Gas-oder Bremspedal in Betracht. Denkbar wäre auch die Erfassung eines Signals der Handbremse oder des Gangwahlschalters. Vorzugsweise sind erstes und zweites Bedienelement 22, 24 so weit voneinander angeordnet, daß ein Kleinkind beide Bedienelemente 22, 24 nicht gleichzeitig betätigen kann. Eine gleichzeitige Betätigung der Bedienelemente 22, 24 ist nämlich bei der ersten Alternative die Voraussetzung zur Erfüllung der Startbedingung gemäß Abfrage 103. Als zweite alternative Startbedingung muß eines der beiden Bedienelemente 22, 24 für eine bestimmte Zeitspanne betätigt worden sein. So muß beispielsweise ein als Startknopf ausgeführtes erstes Bedienelement 22 eine Sekunde lang gehalten werden, bevor die Startbedingung gemäß Abfrage 103 erfüllt ist. Nur dann wird die Berechtigungsabfrage gemäß Schritt 105 ausgeführt.

Hierzu setzen Sender/Empfänger 12 ein Suchsignal ab, das von dem Transponder 14 dann empfangen wird, wenn er sich im Innenraum des Kraftfahrzeugs 8 befindet. Empfängt der Transponder 14 das abgesetzte Suchsignal, sendet er einen Code zurück. Dieser Code wird von dem Sender/Empfänger 12 erfaßt und in dem Steuergerät 10 mit einem erwarteten Code verglichen. Stimmen sie überein - wurde also die Berechtigungsabfrage erfolgreich durchlaufen gemäß Abfrage 107 - schließt sich Schritt 111 an. Bei dem bei der Berechtigungsabfrage gemäß Schritt 105 ausgesendeten Suchsignal kann es sich auch um ein Energiesignal handeln, das den Transponder 14 zur Coderücksendung veranlaßt. Auch die Berechtigungsabfrage gemäß Schritt 105 läßt sich noch weiter verschlüsseln, um Manipulationsversuche zu unterbinden. Die Verschlüsselung könnte beispielsweise nach einem Wechselcodeverfahren erfolgen, bei welchem der Transponder 14 bei jeder Abfrage ein anderes Signal zurücksendet. Bei der Verwendung mehrerer Transponder 14 (für mehrere Kraftfahrzeugbenutzer) ist eine Abfrage nach einem sogenannten Zeitschlitzverfahren zweckmäßig. Jedem Transponder 14 ist ein charakteristischer Zeitschlitz ' zugeordnet, innerhalb dem er einen Code zurücksendet. Anhand der Zeitverzögerung zwischen dem Absetzen eines Suchsignals und dem Eingang des Codes erkennt das Steuergerät 10, welcher Transponder 14 sich im Innenraum des Kraftfahrzeugs 8 befindet. Für jeden dieser über den Zeitschlitz identifizierbaren Transponder ist ein unterschiedlicher Code hinterlegt. Das Steuergerät 10 veranlaßt daraufhin die Sender/Empfänger 12, einen diesem Transponder 14 zugeordneten Code zu senden, der anschließend von dem Transponder 14 nach einem vorgegebenen Algorithmus verarbeitet zurückgesendet wird. Das eingehende Transpondersignal vergleicht das Steuergerät 10 mit einem erwarteten Antwortsignal, das in der gleichen Weise im Steuergerät 10 berechnet wurde.

Stimmt jedoch der von dem Transponder 14 gesendete Code nicht mit dem vom Steuergerät 10 erwarteten Code überein, erfolgt keine Freigabe, Schritt 109. Andernfalls werden die Motorfunktionen uneingeschränkt freigegeben, indem das Steuergerät 10 einen Freigabecode an das Funktionssteuergerät 18 sendet. Das Funktionssteuergerät 18 kann nur nach Erhalt des Freigabecodes den ordnungsgemäßen Betrieb aufnehmen. Zugleich sendet das Steuergerät 10 einen Freigabecode an die Lenkradverriegelung 16, die daraufhin beispielsweise elektromotorisch gelöst wird. Das Kraftfahrzeug 8 und ein erster Timer T1 werden gestartet (Schritt 111).

In der Abfrage 113 wird anhand der von der Sensorik 26 erfaßten Motordrehzahl überprüft, ob der Motor des Kraftfahrzeugs 8 noch läuft. Ist dies der Fall, wird in der Abfrage 115 ermittelt, ob die Bedingungen für die erneute Durchführung einer Berechtigungsabfrage (bei laufendem Motor) gegeben sind. Eine Überprüfung der Fahrberechtigung während der Fahrt ist nicht zweckmäßig, da das Nichtvorhandensein des Transponders 14 zu keinen Konsequenzen für die Weiterfahrt führen darf. Eine Überprüfung bietet sich bei laufendem Motor genau dann an, wenn alle folgende Bedingungen erfüllt sind: das Kraftfahrzeug 8 steht (Fahrzeuggeschwindigkeit beträgt Null), die Kupplung ist nicht getreten, kein Gang eingelegt und der erste Timer T1, der die verstrichene Zeit ab der letzten Abfrage erfaßt, hat eine festlegbare Grenze von beispielsweise 10 Minuten überschritten. Sind diese Bedingungen alle erfüllt, wird in Schritt 117 die Berechtigungsabfrage in Übereinstimmung mit Schritt 105 erneut durchgeführt. Zusätzlich wird unabhängig den Bedingungen nach Schritt 115 die Abfrage beispielsweise alle 30 min aktiviert. Wird die Berechtigung nachgewiesen, Abfrage 119, wird in einem Schritt 121 der erste Timer T1 neu gestartet und anschließend die Programmsequenz mit Abfrage 113 weitergeführt. Sendet der Transponder 14 keinen Code oder nicht den erwarteten, wird in Schritt 123 die Warnanzeige 20 aktiviert und gegebenenfalls die Stillsetzung des Kraftfahrzeugs 8 vorbereitet. Hierbei aktiviert das Steuergerät 10 die Wegfahrsperrenfunktion, indem es einen Befehl an das Funktionssteuergerät 18 sendet, so daß das Funktionssteuergerät 18 nicht mehr ordnungsgemäß betrieben werden kann. Diese Programmsequenz während der Fahrt verbessert den Diebstahlschutz, ohne jedoch zu einer Stillsetzung des Kraftfahrzeugs in kritischen Situationen zu führen. Andererseits gewährleistet die Verwendung des ersten Timers T1, daß der Transponder 14 nicht zu oft im Sinne einer Berechtigungsabfrage aktiviert wird. Dessen Lebensdauer erhöht sich:

Wird in der Abfrage 113 festgestellt, daß der Motor des Kraftfahrzeugs 8 steht (Motordrehzahl gleich Null), wird in Abfrage 125 ermittelt, ob die Zündung eingeschaltet ist. Dies erfolgt durch Auswertung des Ausgangssignals des als Start/Stop-Knopf ausgeführten ersten Bedienelements 22. Sollte der Motor trotz Signal "Zündung an" stehen, läßt dies darauf schließen, daß der Motor abgewürgt, also unbeabsichtigt gestoppt wurde. In dieser benutzerkritischen Situation muß dem Fahrer noch die Möglichkeit gegeben werden, das Kraftfahrzeug 8 auch ohne erfolgreiches ' Durchlaufen einer Berechtigungsabfrage (nach Schritt 105) erneut zu starten. Damit ist für den erneuten Startvorgang das Vorhandensein eines (gültigen) Transponders 14 im Innenraum nicht erforderlich.

Um andererseits die Sicherheit gegen Diebstahl zu gewährleisten, wird ein erneutes Starten ohne Berechtigungsnachweis (gemäß Schritt 129) nur für eine vorgebbare zweite Zeitspanne t2 zugelassen. Hierzu wird ein zweiter Timer T2 gestartet, Schritt 127, dessen Ausgangssignal mit der vorggebaren zweiten Zeitspanne t2 auf ein Überschreiten verglichen wird, Abfrage 128. Solange der zweite Timer T2 die zweite Zeitspanne t2 noch nicht überschritten hat, wird die Stillsetzung des Kraftfahrzeugs 8 mit zugehörigem Senden eines Deaktivierungsbefehls an das Funktionssteuergerät 14 noch nicht durchgeführt, so daß ein erneuter Startvorgang ohne weiteres möglich ist, Schritt 129. Auch die Ansteuerung der Lenkradverriegelung 16 im Verrieglungssinne unterbleibt. Nach Überschreiten der zweiten Zeitspanne.t2 erfolgt die Stillsetzung des Kraftfahrzeugs 8, Schritt 123.

Wurde in Abfrage 125 festgestellt, daß der Motorstillstand (Abfrage 113) in Verbindung mit dem Signal "Zündung aus" auftritt, muß von einer vom Fahrer gewünschten Stillsetzung des Kraftfahrzeugs 8 ausgegangen werden. In der sich anschließenden Abfrage 131 werden die Bedingungen für die Einleitung einer Berechtigungsabfrage gemäß Schritt 133 überprüft. Wird eine gewisse Zeit (beispielsweise 10 Sekunden) überschritten oder detektieren die Türüberwachungsschalter 30 ein Öffnen einer Tür, erfolgt der Wechsel in Schritt 133, der mit dem Schritt 105 übereinstimmt. Alternativ kann die Abfrage 131 ganz entfallen, um Zeitverzögerungen zu vermeiden. Die Berechtigungsabfrage gemäß Schritt 133 dient der Ermittlung, ob ein Transponder 14 im Innenraum vorhanden ist, Abfrage 135. Geht bei dem Sender/Empfänger 12 kein Transpondersignal ein, wird in einem Schritt 137 die Warnanzeige 20 aktiviert, um dem Benutzer zu signalisieren, daß der Transponder 14 fehlt. Andernfalls schließt sich sofort Schritt 139 an, in dem angezeigt wird, daß die Lenkradverriegelung 16 erfolgen wird (ggf. mit dem Hinweis, in wieviel Sekunden). Das Steuergerät 10 sendet an das Funktionssteuergerät 18 einen Deaktivierungbefehl, der den ordnungsgemäßen Betrieb des Funktionssteuergexäts 18 unterbindet und damit die Wegfahrsperre aktiviert. Zugleich wird ein dritter Timer T3 gestartet.

Gemäß Abfrage 145 wird der dritte Timer T3 auf Überschreiten einer vorgebbaren dritten Zeitdauer t3 überwacht. Solange der dritte Timer T3 diese Schwelle noch nicht erreicht hat, kann die Lenkradverriegelung 16 durch Betätigung des zweiten Bedienelements 24 wie Kupplungs-, Brems- oder Gaspedal unterbunden werden. Das Kraftfahrzeug 8 läßt sich somit beispielsweise bei abgestelltem Motor noch sicher in die Garage rollen, Schritt 147.

Andernfalls folgt eine entsprechende Verrieglungs-Ansteuerung der Lenkradverriegelung 16. Dem Benutzer wird über die Anzeige 20 signalisiert, daß die Lenkradverriegelung erfolgt, Schritt 149. In der Abfrage 151 wird der Zustand des Kraftfahrzeugs 8 auf eine kritische Situation hin überprüft. Dies könnte beispielsweise der Fall sein, wenn die Sensorik 26 ein Ausgangssignal abgibt, das auf eine Bewegung des Kraftfahrzeugs 8 schließen läßt. Alternativ könnte auch der Zustand der Bedienelemente 22, 24 überwacht werden. Bei Betätigung eines der Bedienelemente 22, 24 wird auf eine kritische Situation geschlossen, da ja das Lenkrad bereits verriegelt wurde. Um den Benutzer auf diese kritische Situation aufmerksam zu machen, wird in Schritt 153 die Anzeigeeinheit 20 im Sinne einer Warnung angesteuert. Alternativ könnte auch vorgesehen werden, die Lenkradverrieglung aufzuheben.

## Patentansprüche

1. Vorrichtung zum schlüssellosen Betrieb eines Kraftfahrzeugs (8), mit einem Transponder (14), der an zumindest einen Sender/Empfänger (12) einen Code sendet, mit einem Steuergerät (10), das den Code mit einem erwarteten Code vergleicht und bei Übereinstimmung zumindest eine für den Betrieb des Kraftfahrzeugs (8) notwendige Komponente (16, 18) freigibt und im abgestellten Zustand des Kraftfahrzeugs (8) deaktiviert, mit zumindest einem Zeitgeber (T2, T3), der einen Ausgangswert zum Vergleich mit einer vorgebbaren Zeitdauer (t2, t3) liefert, wobei eine Deaktivierung der zumindest einen für den Betrieb des Kraftfahrzeugs (8) notwendigen Komponente (16, 18) erfolgt, wenn der Ausgangswert des Zeitgebers (T2, T3) die vorgebbare Zeitdauer (t2, t3) überschreitet, **dadurch gekennzeichnet, dass** ein Start des Zeitgebers (T2, T3) in Abhängigkeit von einem Sensorsignal eines den Zustand des Antriebsmotors des Kraftfahrzeugs (8) erfassenden Sensors (26) erfolgt, wobei eine Unterbindung der Deaktivierung der für den Betrieb des Kraftfahrzeugs (8) notwendigen Komponente (16, 18) im Falle einer Betätigung eines Bedienelements (22, 24) und bei Nichtüberschreiten der vorgebbaren Zeitdauer (t2, t3) durch den Ausgangswert des Zeitgebers (T2, T3) erfolgt.

2. Vorrichtung nach Anspruch 1, **dadurch gekennzeichnet, dass** der Start des Zeitgebers (T2, T3) erfolgt, wenn der Antriebsmotor des Kraftfahrzeugs (8) steht.

3. Vorrichtung nach einem der vorhergehenden Ansprüche, **dadurch gekennzeichnet, dass** der Start des Zeitgebers (T2, T3) in Abhängigkeit von dem Zustand des Bedienelements (22, 24) erfolgt.

4. Vorrichtung nach Anspruch 3, **dadurch gekennzeichnet, dass** das Bedienelement (22, 24) ein Start- und/oder Zündungsschalter des Kraftfahrzeugs (8) ist.

5. Vorrichtung nach einem der vorhergehenden Ansprüche, **dadurch gekennzeichnet, dass** zur Deaktivierung der für den Betrieb des Kraftfahrzeugs (8) notwendigen Komponente (16, 18) das Steuergerät (10) an diese einen entsprechenden Befehl sendet.

6. Vorrichtung nach einem der vorhergehenden Ansprüche, **dadurch gekennzeichnet, dass** es sich bei der für den Betrieb des Kraftfahrzeugs (8) notwendigen Komponente (16, 18) um ein Funktionssteuergerät (18) wie beispielsweise ein Motorsteuergerät handelt.

7. Vorrichtung nach einem der vorhergehenden Ansprüche, **dadurch gekennzeichnet, dass** es sich bei der für den Betrieb des Kraftfahrzeugs (8) notwendigen Komponente (16, 18) um eine Lenkradverriegelung (16) handelt, die bei einer Deaktivierung das Lenkrad verriegelt.

## Claims

1. Apparatus for keyless operation of a motor vehicle (8), having a transponder (14) which emits a code to at least one transmitter/receiver (12), having a controller (10) which compares the code with an expected code and, when the codes match, enables and, in the switched off state of the motor vehicle (8) deactivates, at least one component (16, 18) which is required for operation of the motor vehicle (8), having at least one timing means (T2, T3) which supplies an initial value for comparison with a prespecified time period (t2, t3), with the at least one component (16, 18) which is required for operation of the motor vehicle (8) being deactivated when the initial value of the timing means (T2, T3) exceeds the prespecified time period (t2, t3), **characterized in that** the timing means (T2, T3) is started as a function of a sensor signal from a sensor (26) which detects the state of the drive motor of the motor vehicle (8), with deactivation of the component (16, 18) which is required for operation of the motor vehicle (8) being suppressed if an operator control element (22, 24) is operated and when the initial value of the timing means (T2, T3) does not exceed the prespecified time period (t2, t3).

2. Apparatus according to Claim 1, **characterized in that** the timing means (T2, T3) is started when the drive motor of the motor vehicle (8) is still.

3. Apparatus according to either of the preceding claims, **characterized in that** the timing means (T2, T3) is started as a function of the state of the operator control element (22, 24).

4. Apparatus according to Claim 3, **characterized in that** the operator control element (22, 24) is a start and/or ignition switch of the motor vehicle (8).

5. Apparatus according to one of the preceding claims, **characterized in that**, in order to deactivate the component (16, 18) which is required for operation of the motor vehicle (8), the controller (10) emits a corresponding command to the said component.

6. Apparatus according to one of the preceding claims, **characterized in that** the component (16, 18) which is required for operation of the motor vehicle (8) is a function controller (18), for example an engine controller.

7. Apparatus according to one of the preceding claims, **characterized in that** the component (16, 18) which is required for operation of the motor vehicle (8) is a steering lock (16) which locks the steering wheel in the event of deactivation.

## Revendications

1. Dispositif pour faire fonctionner un véhicule automobile (8) sans l'aide d'une clé, comprenant un transpondeur (14) envoyant un code à au moins un émetteur/récepteur (12),
un appareil de commande (10) qui compare le code à un code prévisible et en cas de concordance libère au moins un composant (16, 18) nécessaire au fonctionnement du véhicule automobile (8) et le désactive lorsque le véhicule automobile (8) est en position arrêtée,
au moins une horloge (T2, T3) qui fournit une valeur de sortie pour être comparée à une durée prédéfinie (t1, t2), la désactivation d'au moins un composant (16, 18) nécessaire au fonctionnement du véhicule automobile (8) se faisant si la valeur de sortie de l'horloge (T2, T3) dépasse la durée prédéfinie (t2, t3),
**caractérisé en ce que**
le démarrage de l'horloge (T2, T3) se fait en fonction du signal fourni par un capteur (26) détectant l'état du moteur du véhicule automobile (8), la désactivation des composants (16, 18) nécessaires au fonctionnement du véhicule (8) étant interdite en cas d'actionnement d'un élément de commande (22, 24) et le non dépassement de la durée prédéfinie (t2, t3) par la valeur de sortie fournie par l'horloge (T2, T3).

2. Dispositif selon la revendication 1,
**caractérisé en ce que**
l'horloge (T2, T3) démarre lorsque le moteur du véhicule (8) est arrêté.

3. Dispositif selon l'une des revendications précédentes,
**caractérisé en ce que**
le démarrage de l'horloge (T2, T3) se fait en fonction de l'état de l'élément de commande (22, 24).

4. Dispositif selon la revendication 3,
**caractérisé en ce que**
l'élément de commande (22, 24) est la clé de démarrage et/ou de contact du véhicule automobile (8).

5. Dispositif selon l'une des revendications précédentes,
**caractérisé en ce que**
pour désactiver les composants (16, 18) nécessaires au fonctionnement du véhicule automobile (8), l'appareil de commande (10) envoie un ordre correspondant à ces composants.

6. Dispositif selon l'une des revendications précédentes,
**caractérisé en ce que**
les composants (16, 18) nécessaires au fonctionnement du véhicule automobile (8) sont un appareil de commande de fonctionnement (18) tel que par exemple un appareil de commande du moteur.

7. Dispositif selon l'une des revendications précédentes,
**caractérisé en ce que**
les composants (16, 18) nécessaires au fonctionnement du véhicule automobile (8) sont la serrure de direction (16) qui verrouille le volant lorsqu'elle est désactivée.
